Europäisches Patentamt

European Patent Office

Office européen des brevets

(11) Publication number: **0 262 742**
**A2**

## (12) EUROPEAN PATENT APPLICATION

(21) Application number: 87201863.5

(22) Date of filing: 29.09.87

(51) Int. Cl.⁴: **A01D 43/10**

(30) Priority: 30.09.86 NL 8602464

(43) Date of publication of application:
06.04.88 Bulletin 88/14

(84) Designated Contracting States:
DE FR GB NL

(71) Applicant: **C. van der Lely N.V.**
**Weverskade 10 P.O. Box 26**
**NL-3155 ZG Maasland(NL)**

(72) Inventor: **Van der Lely, Cornelis**
**7 Brüschenrain**
**ZUG(CH)**

(74) Representative: **Mulder, Herman et al**
**Octrooibureau Van der Lely N.V. Weverskade**
**10 P.O. Box 26**
**NL-3155 ZG Maasland(NL)**

(54) **A mowing machine.**

(57) A mowing machine comprising mowing members (35) which are power-driven about upwardly extending axes of rotation (41), and a rotor-shaped processing member (61) provided near said mowing members. Said mowing members (35) include upwardly extending drum-shaped members (38), the outer circumference of which describes, during operation of the machine, an imaginary figure being concave to the rear side so as to be operatable with the processing members (61). A grid assembled of rods (105) is adjustably mounted above the rotor-shaped processing member (61).

FIG. 2

# A MOWING MACHINE

The invention relates to a mowing machine comprising mowing members which are power-driven about upwardly extending axes of rotation, and a rotor-shaped processing member provided near said mowing members.

It is an object of the invention to provide an advantageous construction of a mowing machine according to the invention.

According to the invention, this can be achieved in that at least one mowing member includes an upwardly extending drum-shaped member, the outer circumference of which describes during operation an imaginary figure which, seen in a direction transversely to the direction of operative travel of the machine, has such a concave rear side that said drum-shaped member can co-operate with the periphery of the rotor-shaped processing member. Due to the concave rear side of the rotor-shaped member, the periphery of the rotor-shaped processing member can be provided so close to the rotor-shaped member that a proper operation of the processing member cum rotor-shaped member is possible. Thus, the processing member in an advantageous manner takes over from the mowing members the crop mown thereby. Then the processing member can advantageously subject the mown crop to a further processing operation. In addition, the rotor-shaped processing member may be very close to the rotor-shaped member of the mowing member, so that the distance to be covered by the mown grass is as short as possible. This is also advan tageous for the dimensioning of the mowing machine.

An advantageous embodiment of the mowing machine of the invention is obtained when the drum-shaped member is designed as a substantially fully closed member in the shape of a wall extending around the axis of rotation of the mowing member. The construction of the mowing machine can advantageously be simplified by coupling the mowing member to a bevel gear transmission in a sealed gear box. The gear box may be detachably connected to a frame beam of the machine. Thus, in case of damage to a mowing member and/or to the gear box, they can be removed from the frame beam and be replaced by another one.

In accordance with a further embodiment of the mowing machine according to the invention, the machine includes a processing member provided with a plurality of tines of such a construction that the end portions are thinner than remote from their extreme ends. Thus, the tine ends can perform a kind of cutting action on the crop taken along by the tines during rotation of the rotor-shaped processing member.

In a further embodiment of the mowing machine according to the invention, the processing member is coupled to drive means which are of such a construction that they drive the processing member in one of two directions of rotation about the axis of rotation of the processing member during operation of the machine. In this manner the action of the processing member can be adapted in a simple way to the manner in which one wants to process the crop mown by the mowing member. This significantly increases the range of uses of the mowing machine.

An advantageous construction of the processing member is obtained when it includes a carrier assembled from two or more plate-shaped parts, said plates being identical. Using this construction, the manufacture of the processing member can be simplified. In addition, it provides the possibility to replace a damaged part by another part.

In accordance with a further embodiment of the mowing machine of the invention, a grid which is assembled from rods or similar members and can co-operate with processing members which are movable during operation, is mounted on the mowing machine above the processing member. During operation, the mown crop can be passed between the grid and the processing member, it thus being possible to subject the mown crop to a given processing operation.

In an advantageous embodiment, the rod-shaped members are spaced apart by distances which are at least substantially equal to that between the tine-shaped elements fitted to the processing member. The processing of the crop can advantageously be adapted by fitting the grid assembled from rods, to the machine in such a manner that it is adjustable in height. Thus, it is possible to set the grid-to-processing member distance, which may be important for adapting the desired processing operation and/or adaptation to the quantity of crop to be passed between the processing member and the grid.

In a further embodiment of the machine, a crop separator is provided remote from facing ends of the processing member. By means of this feature the crop deposited on the soil can, during travel of the machine, be separated over a predetermined strip at a predetermined distance between the ends of the processing member. In a subsequent operating run this strip may be important in that a wheel of a tractor or a similar vehicle can travel over the mown section without this wheel crushing the crop deposited on the soil.

For a better understanding of the invention and to show how the same may be carried into effect, reference will now be made, by way of example, to the accompanying drawings of an advantageous embodiment of a mowing machine according to the invention, in which drawings:

Figure 1 is a plan view of a mowing machine according to the invention;

Figure 2 is an elevational view of the mowing machine as shown in Figure 1, taken in the direction of the arrow II in Figure 1;

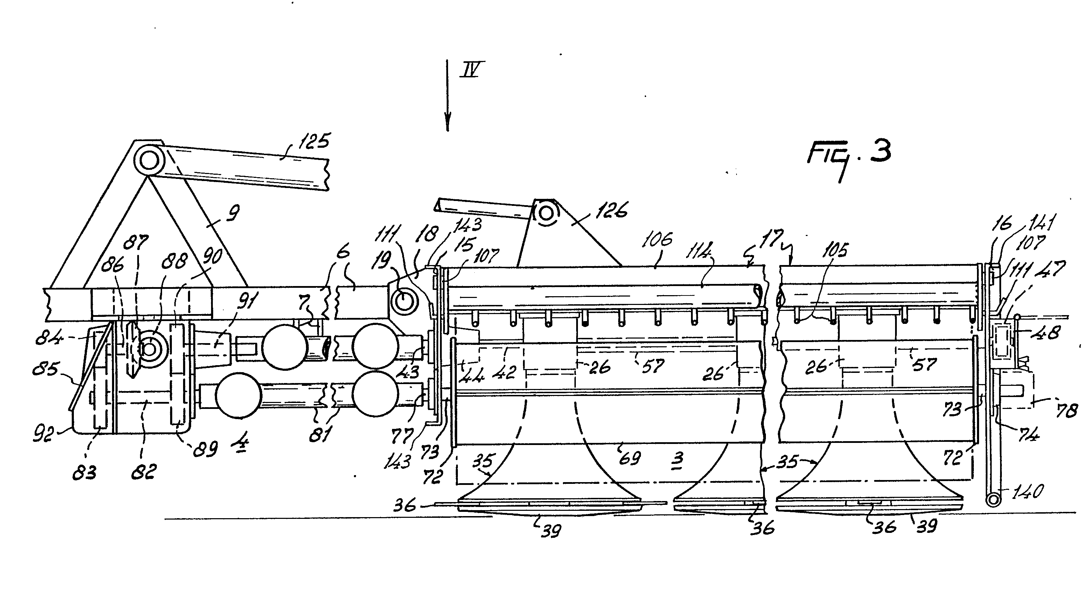

Figure 3 is a rear view of the mowing machine, taken in the direction of the arrow III in Figure 1;

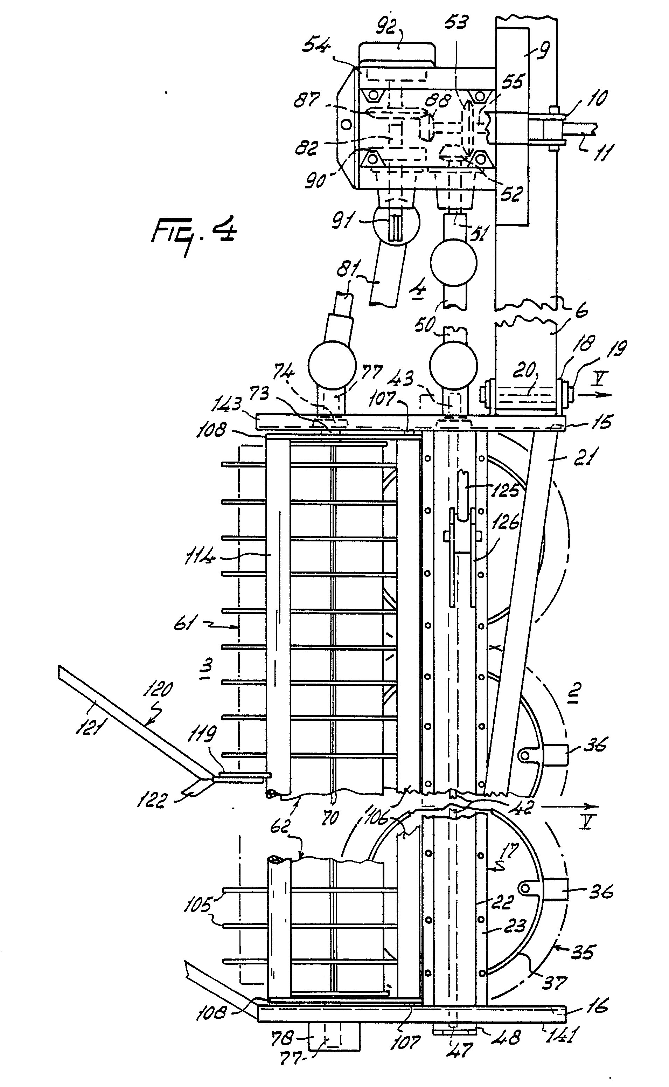

Figure 4 is, to an enlarged scale, a plan view of the mowing machine taken in the direction of the arrow IV in Figure 3;

Figure 5 is, to an enlarged scale, a portion of the mowing machine in a rear view, taken on the line V -V in Figure 3;

Figure 6 is, to an enlarged scale, a cross-sectional view of the mowing machine, taken on the line VI-VI in Figure 5, and

Figure 7 is a plan view of a portion of the mowing machine, taken in the direction of the arrow VII in Figure 6.

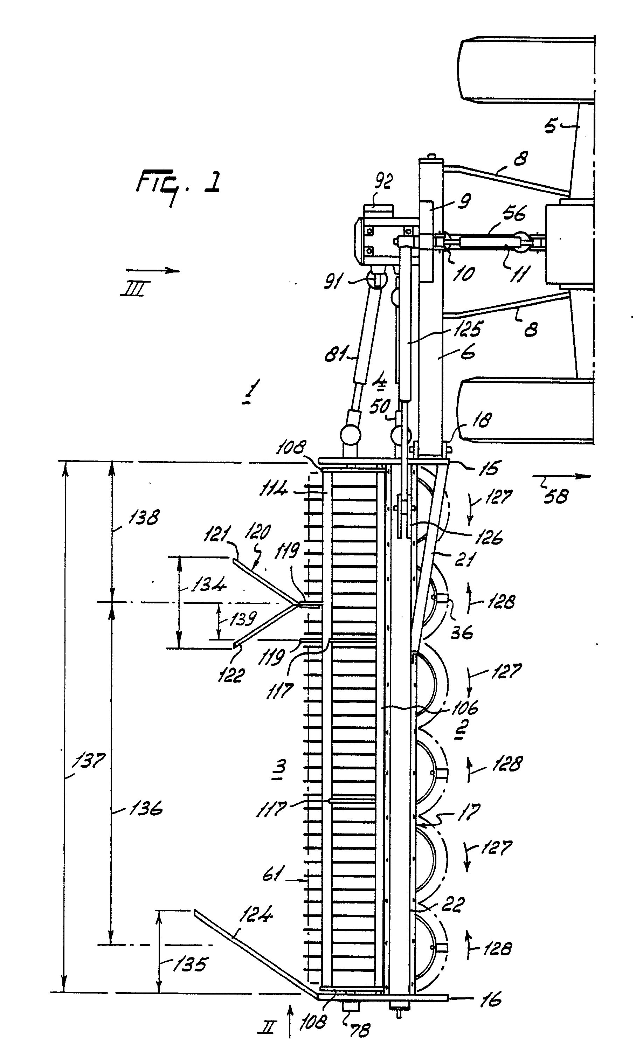

According to the invention, the mowing machine 1 shown in the drawings comprises a mowing section 2 including a processing device 3. The mowing section 2 and the processing device 3 assembly is connected to a carrier frame 4, by means of which the mowing machine can be coupled to a tractor 5 or to a suchlike vehicle, as is shown in Figure 1.

According to the invention, the carrier frame 4 comprises a carrier arm 6 provided with lugs 7, by means of which the carrier frame can be coupled to the lifting arms of the lifting hitch 5. A trestle 9, which is provided with lugs 10 that can be coupled to the top rod 11 of the three-point lifting hitch of the tractor, is mounted on the upper side of the carrier arm 6.

According to the invention, the mowing section 2 comprises two frame plates 15 and 16, between which a frame beam 17 is arranged. The frame plate 15 includes lugs 18 which are coupled pivotally to the carrier arm 6 by means of a shaft 19. The centre line of the shaft 19 constitutes a pivotal axis 20 between the carrier frame 4 and the mowing section 2. The connection of the frame beam 17 to the frame plate 15 is reinforced by a strut 21.

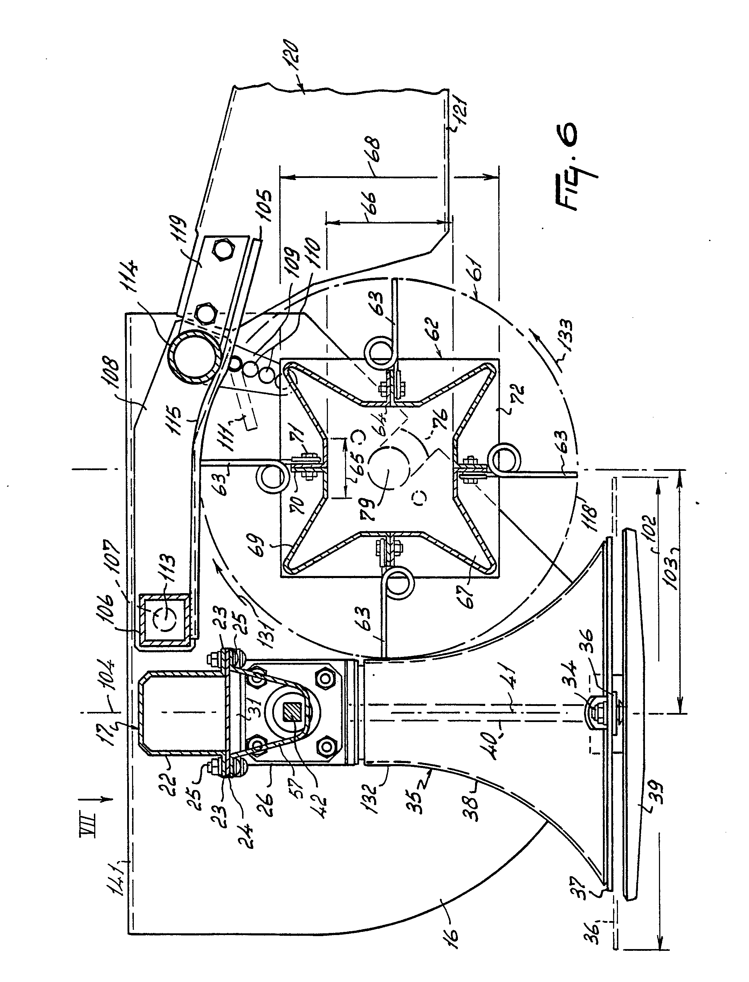

As is apparent in particular from Figure 6, the frame beam 17 is constituted bu a U-shaped beam 22 which at its bottom side is provided with edges 23 which are folded over at right angles. The bottom side of the frame beam 17 is formed by a bottom plate 24 which is bolted to the edges 23 by means of bolts 25.

In this embodiment, six gear boxes 26 are fitted against the bottom side of the frame beam 17. The gear boxes 26 are identical and for that reason only one gear box is shown in greater detail. In accordance with the invention, each gear box 26 is a sealed gear box in which a bevel gear wheel 27 is bearing-supported and is connected to a bushing 28. The bushing 28 is bearing-supported (in a manner not shown in further detail) in facing vertical sides of the gear box 26. The bushing 28 is provided with an out-of-round hole 29 extending in the longitudinal direction of the bushing 28. The out-of-round hole 29 constitutes a continuous hole through the gear box 26, the hole forming apertures at those sides of the gear box 26 where the bushing 28 is bearing-supported. The bevel gear wheel 27 meshes with a bevel gear wheel 30 which is bearing-supported (in a manner not shown in further detail) below the bushing 28 in the bottom wall of the gear box 26.

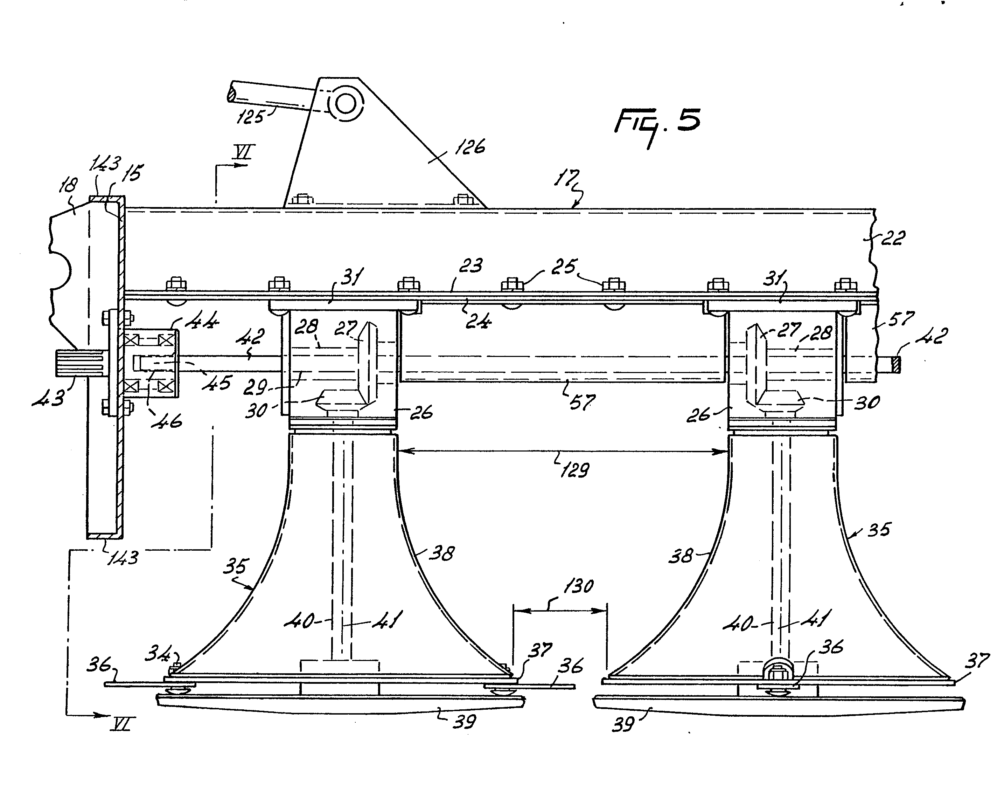

At its bottom side, each gear box 26 is fitted with a mowing member 35. The mowing members mounted on each of the gear boxes are identical and for that reason the construction of only one mowing member will be illustrated in detail. The mowing member 35 shown in Figure 5 and having a construction in accordance with the invention, includes two diametrically opposite mower members 36 designed as mowing knives. The mowing elements 36 are mounted on carriers 37. The mowing members 35 are provided with drum-shaped members 38 which taper upwardly. The bottom sides of the drum-shaped members 38 are substantially contiguous to the upper side of the carriers 37. The lower ends of the drum-shaped members have their periphery located near the connecting members 34, by means of which the mowing elements are connected to the carriers 37. In this embodiment, the drum-shaped members are round and by means of their upper ends extend to near the lower side of the gear boxes 26, the arrangement being such as is shown in particular in Figure 5. In a side view and a rear view (Figures 6 and 5), the upper ends of the drum-shaped members have a periphery which is approximately equal to the width of a gear box 26. In this embodiment, the mowing members 35 have a central carrier shaft 40 which has its upper end bearing-supported in the gear box 26 and is connected to the gear wheel 30. The drum-shaped member 38 extends concentrically around the centre line 41 of the carrier shaft 40. The centre line 41 of the carrier shaft constitutes an axis of rotation for the mowing member 35.

The gear wheels 27 and 30, which form transmission members in the gear boxes 26, are coupled to a drive shaft 42. Below the frame beam 17, the drive shaft 42 extends parallel to the frame beam. The drive shaft 42 reaches into the bushings 28 through the holes 29. At least in the region of the holes 29, the drive shaft 42 is, in a cross-sectional view, substantially equal to the cross-section of the holes 29. These out-of-round cross-sections are such that the bushings 28 are connected rigid against rotation to the shaft 42 when this shaft extends through the holes 29. The drive shaft 42 is coupled to a coupling shaft 43. The coupling shaft 43 is bearing-supported in a bearing housing 44 connected to the frame plate 15. The coupling shaft 43 has an aperture 46 which is equal to the cross-section of the end 45 of the shaft 42, such that the drive shaft 42 is coupled rigid against rotation to the coupling shaft 43. The drive shaft 42 has its end 47, which is located near the frame plate 16, located in a lock housing 48 which is connected to the frame plate 16 and includes a removable cover (not shown). The frame plate 16 is provided with a bore for the drive shaft 42. The end 47 of the drive shaft 42 is formed into a handle which is located such in the housing 48 that, in the mounted condition and the lock housing 48 being closed, the drive shaft 42 cannot move in its longitudinal direction. The coupling shaft 43 is coupled via an intermediate shaft 50 to a coupling shaft 51, on which a bevel gear wheel 52 is mounted. The bevel gear wheel 52 meshes with a bevel gear wheel 53. The bevel gear wheels 52 and 53 constitute transmission members located within a box 54. The bevel gear wheel 54 is provided on a coupling shaft 55 which extends forwardly from the gear box 53 and can be coupled via an intermediate shaft 56 to the power take-off shaft of the tractor 5 or a suchlike vehicle.

Interposed between the gear boxes 26 are protection hoods 56 which are fitted against the bottom side of the frame beam 17 and protect the drive shaft 42.

The mowing members 35, six in this embodiment, are arranged in a row, as is shown in particular in Figure 1. In this situation, the axes of rotation 41 of the six mowing members are located in a plane 104. Near the row of mowing members and, relative to the direction of operative travel 58 of the machine, behind the plane 105 a rotor-shaped processing member 61 is provided. This rotor-shaped processing member of a construction according to the invention, includes a drum-shaped carrier member 62 provided with tine-shaped projections 63. In a cross-sectional view as shown in Figure 6, the carrier member is of a somewhat star-like shape. The carrier member 62 has four sides 64 which form, as it were, part of a square. In this situation, the sides 64 are perpendicular to each other and each have a width 65 approximately equal to half 66 of the distance between two facing sides 64. With respect to the sides 64, the carrier member 62 has four stelliform projections 67 which have walls arranged in the shape of a V. The projections 67 together with those parts of the V-arranged walls that are most remote from each other are connected to the sides 64. The projections 67 extend pairwise from the sides 64 approximately diametrically relative to each other and, seen in cross-section (Figure 6), have outwardly converging sides. The ends of the projections are located in the angular points of a square which has a width 68 which is approximately 1.5 times larger than the distance 66. The carrier member 62 is formed from four equally shaped plate sections 69, each plate section having a projection 67 and half the length of two sides 64. The plate sections 69 have projecting edges 70, by means of which they are bolted to each other by means of bolts 71. At the ends of the carrier member end plates 72 are disposed which are square and have sides of a length equal to the distance 68. Stub axles 73, by means of which the carrier member is rotatably supported in bearings 74, are provided on the end plated 72. The bearings 74 are located in slotted holes 76 provided in the frame plates 15 and 16. The bearings 74 are bolted to these frame plates by means of bolts 75. The stub axles 73 are inserted through the bearings 74 and extend to outside these bearings by means of their ends 77. A protection hood 78, which is arranged around the end 77 and is coupled to the bearing 74, is provided near the frame plate 16. Connected to the end 77 of the stub axle 73 located near the frame plate 15 is an intermediate shaft 81 for driving the processing member 61 around the centre line 79 of the stub axles 73. The centre line 79 then constitutes an axis of rotation for the rotor-shaped processing member 61.

The intermediate shaft 78, disposed in accordance with the invention, is connected to a shaft 82 which is bearing-supported in the gear box 54. The shaft 52 is coupled to a shaft 86 by means of gear wheels 83 and 84. The gear wheels 83 and 84 constitute change gear wheels which are interchangeable and can be exchanged for other gear wheels. The gear wheels 83 and 84 are accommodated in a change gear box 92 fitted to the gear box 54. The change gear box 92 is covered by an easily removable cover 85 and is separated by a wall from the space enclosed by the box 54. The change gear wheel 84 is disposed on a shaft 86, which is coupled via a bevel gear wheel 87 to a bevel gear wheel 88 mounted on the shaft 55. Inside the box 54, the shaft 82 has a gear wheel 89 which meshes with a gear wheel 90. The gear wheel 90 is mounted on a coupling shaft 91.

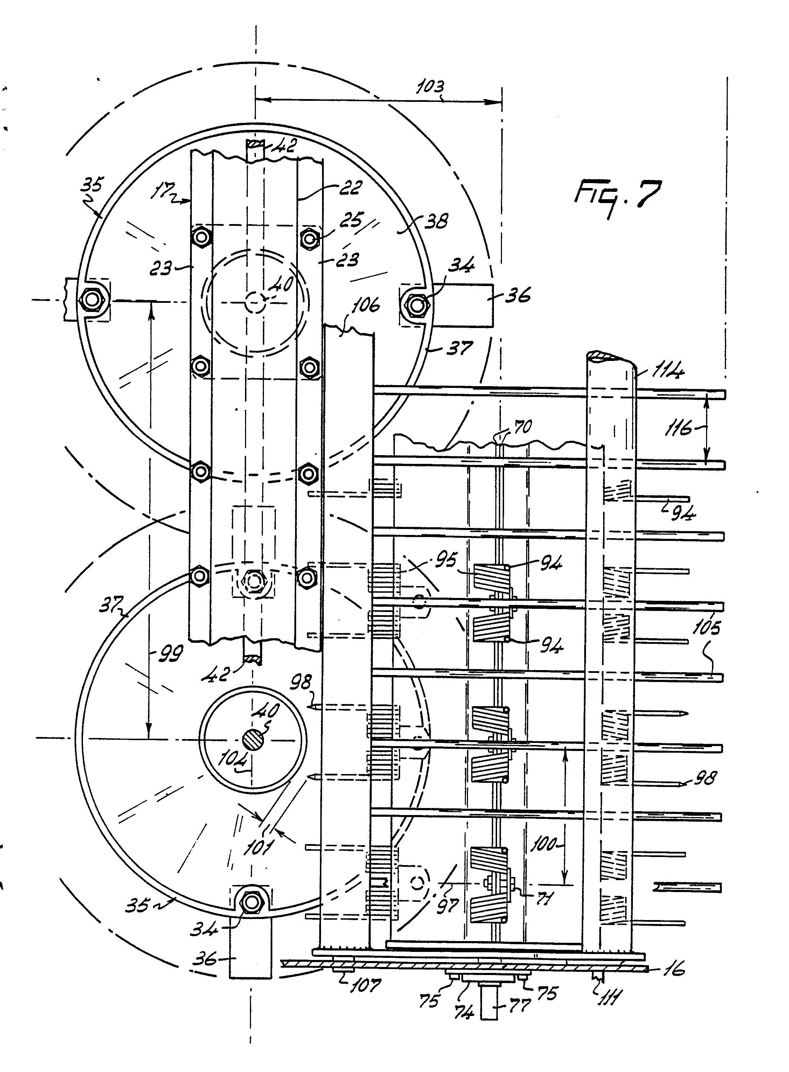

The tine-shaped projections 63 of the processing member 61 each have two tines 94 which are interconnected via turns 95 and are bolted to the carrier member 62 by means of the bolts 71. The turns 94 have their centre lines located in planes which are perpendicular to the axis of rotation 79 of the processing member 61, as is shown in particular in Figure 7. The centre lines of bolts 71, by means of which the tine-shaped projections 63 are bolted to the carrier member 62, are located in each plane 97 which comprises the axis of rotation of a mowing member 55 and extends in the direction of operative travel. Tines 94, whose end portions 98 are pointed or in the form of knives and constitute cutters, are located on both sides of this plane 97. Only those tines 94 of the tine-shaped projections 63 which are secured by means of bolts 71, whose centre lines are located in the plane 97, are provided with these end portions 98. The tines 94 of the projections 63 which are connected remote from the planes 97 to the carrier member 62, are not provided with sharpened end portions 98 and have straight extreme ends, the arrangement being such as is illustrated in Figure 7. The extreme ends of the end portion 98 are thinner than those portions of a tine 94 that are remote from the extreme ends. Two additional tine-shaped projections 63 are bolted between adjacent planes 97 to the carrier member 62 via two contiguous edges 70 by means of two bolts 71. Thus, adjacent tine-shaped projections 63 are spaced apart by a distance 100 which is equal to 1/3 of the distance 99 between two adjacent planes 97. In this embodiment, the planes 97 are spaced apart by a distance 99 of approximately 50 cms. In this situation, the tips of the diametrically opposite knife elements of a mowing member 35 are removed from each other by a distance 102 which slightly exceeds 50 cms. The axis of rotation 79 of the rotor-shaped processing member 61 is located behind the plane 104 at a distance which is approximately equal to half the diameter 102, the arrangement being such as is shown in particular in Figure 6. Assuming the axes of rotation 41 to be in the vertical position, the shaft 79 is located below the upper side of the drum-shaped members 38 of the mowing members 35.

Above the rotor-shaped processing member 61 there are arranged processing members which co-operate with the processing member 61 and in this embodiment are designed as rods 105. Seen in the direction of operative travel 58, the rods 105 have their front side connected to a carrier beam 106. At its ends, the carrier beam 106 is provided with journals 107, by means of which the carrier beam 106 is pivotally bearing-supported in the frame plates 15 and 16, which is not shown in further detail. Supporting strips 108 are connected to the ends of the carrier beam 106. The supporting strips 108 extend rearwardly from a carrier beam 106 and, near their ends, are provided with downwardly directed lugs 109. The lugs 109 are provided with a row of holes 110 which are located concentrically around the centre line 113 of the carrier beam 106. A locking pin 111 can optionally be inserted through one of the holes 110. In addition, the locking pin 111 can be inserted through one of the holes 112 which are applied in the respective frame plates 15 and 16 in accordance with a curve around the centre line of the carrier beam 106. The holes 112 are removed from each other at distances different from those separating the holes 110. The ends of the supporting strips 108 are interconnected by a connecting beam 114, which in this embodiment is a round tube. The connection of the tube 114 to the frame beam 106 is further reinforced by two supporting strips 117 which are equally distributed over the spacing between the supporting strips 108. The rods 105 are fastened against the bottom side of the connecting beam 114. The rods 105 have a curved portion 115 which, in the vertical position of the plane 104, extends from approximately straight above the pivotal shaft 79 to near the bottom side of the connecting beam 114. The rods 105 extend rearwardly to beyond the connecting beam 114 through such a distance that the ends of the rods 105 are located slightly further to the rear than the imaginary cylinder surface 118 along which the tips of the tines 94 move on rotation of the processing member 61, the arrangement being such as is shown in particular in Figure 6. The curved portion 115 is of a length approximately equal to the distance through which the rods 105 extend behind the tube 114.

Two supporting strips 119 are fitted to the connecting beam 115. Optionally, a crop separating member 120 can be connected to one of the supporting strips 119. The crop separating member has two rearwardly diverging swath boards 121 and 122, the ends of which are spaced from each other by a distance which slightly exceeds or is at least approximately equally large as the width of an average tractor wheel. The crop separating member 120 is remote from those ends of the processing member 61 that are located near the frame plates 15 and 16. A swath board 124 is fitted to frame plate 16 near the free end of the mowing section 2.

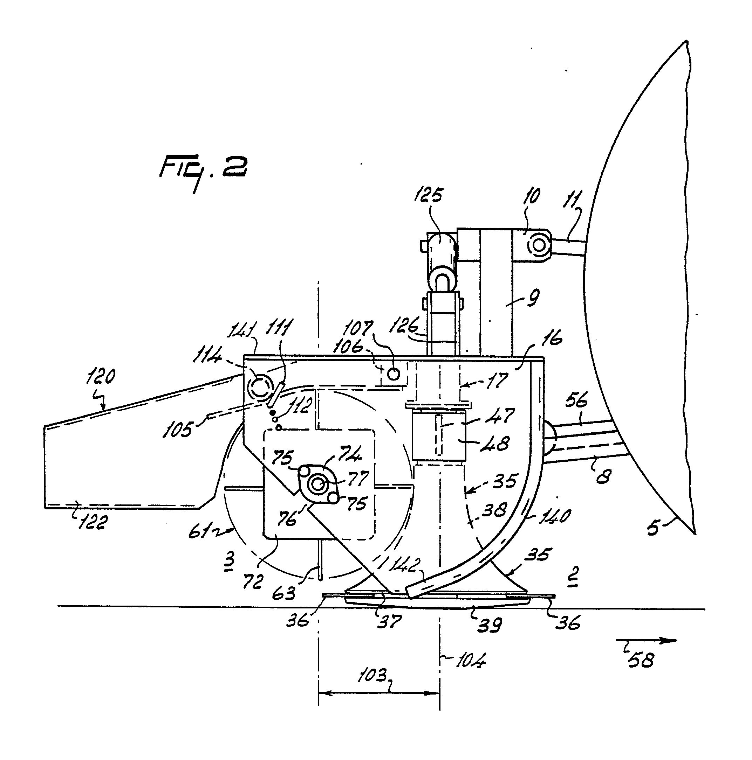

Near the frame plate 15, the frame beam 17 is provided with lugs 126, between which there is pivotally arranged the end of a lifting member which includes a lifting cylinder 125 and extends between the lugs 126 and the upper side of the trestle 9. The frame plates 15 and 16 extend by means of their upper side 141 to the upper side of the beam 17. The front side 140 of the plates 15 and 16 is located, in a side view (Figure 2), above the front side of the mowing members 35 and the paths described by the knives 36 during operation. At its front side, the plate 16 is provided with a tubular supporting edge which reaches by means of its lower end 142 to near the bottom side of the mowing member 35. The lower end 142 extends, in a direction taken from above the tube 140, rearwardly to behind the plane 104. The plate 15 has outwardly folded stiffening edges 143. Such a stiffening edge is also provided at the upper side of the plate 16.

During use of the mowing machine, it is coupled by means of the carrier frame 4 to the lifting hitch of a tractor or a suchlike vehicle. To achieve this coupling, the coupling shaft 55 is coupled to the power take-off shaft of the tractor 5 by means of an intermediate shaft 56, the arrangement being such as is shown in particular in Figures 1 and 2.

When the implement moves in the direction indicated by the arrow 58, the row of mowing members 35 is located transversely thereto. During operation, the mowing members 35 are caused to rotate in a direction indicated by the arrows 127 and 128. In this situation, adjacent mowing members move in the opposite direction to each other around their axes of rotation 41. In this situation, the mowing members 35 at the ends of the row move such that the forwardly facing sides move towards each other. The drive is effected from the power take-off shaft via the transmission members 53 and 52 and the intermediate shaft 50 to the drive shaft 42. By means of the transmission members 27 and 30 accommodated in the gear boxes 26 the drive shaft 42 induces the mowing members to rotate. Because of the opposite directions of rotation 127 and 128 of adjacent mowing members, the crop mown by the mowing elements 36 will move rearwardly between two adjacent mowing members with respect to the direction of operative travel 58. The drum-shaped members 38 of the mowing members 35 will constitute together with the mowing elements a conveyor for the mown crop. Because of the large diameter of the lower ends of the drum-shaped members 38, the crop mown by the mowing elements 36 can be appropriately picked up and conveyed by the members 38. The upwardly tapering drum-shaped members provide a large space between adjacent mowing members 35. The distance 129 is particularly large between the upper ends. This distance 129 is twice or more times larger than the distance 130 between the lower ends of the drum-shaped members 38 of the adjacent mowing members 35. In this embodiment, the distance 129 is more than three times larger than the distance 130. Consequently, in particular when a large quantity of crop is mown per unit of length to be mown, the large quantity of crop will, whilst being moved to the rear between the two drum-shaped members, be forced upwardly via the upwardly widening space towards the distance 129. Hereby the mown crop will loosely be moved to the rear. The crop will be picked up at the rear side of the drum-shaped members 38 by the rotor-shaped processing member 61. Thus, the rotor-shaped processing member constitutes a further conveyor member for the crop.

The rotor-shaped processing member is driven via the intermediate shaft 81 and the transmission members formed by the different gear wheels in the box 54. In the embodiment shown, in which the intermediate shaft 81 is coupled to the shaft 82, the rotor-shaped processing member 61 rotates in the direction indicated by the arrow 131. On rotation of the processing member 61 in the direction indicated by the arrow 131, the crop moved rearwardly by the mowing members 35 is taken along in the upward direction by the processing member 61 and is moved between the rods 105 and the rotor-shaped member 61. The crop is then caught in particular by the tines 94. The crop picked up by the rotor-shaped processing member 61 is pushed during rotation in the direction of the arrow 131 against and/or between the rods 105, so that the crop can be subjected to a predetermined processing operation. During this processing operation, the crop can be broken or crushed to some extent, which may advantageously influence the drying of the crop after it has been deposited on the soil behind the mowing machine after having been passed between the rods 105 and the rotor-shaped processing member 61. Breaking and crushing of the crop advantageously influences a loose deposition of the crop on the soil. The position of the connecting element 114 contributes to the breaking and crushing of the crop, in particular when the tines 94 move past the element 114. The portion 115 is also of importance for the processing of the crop. The rods 105 are disposed such that they are located between the paths described by the tines 94 during operation. Therefore, the number of rods 105 is approximately equal to the number of tines 94 in a row.

The position of the rods 105 can be adjusted relative to the rotor 61 by moving the rods about the pivotal shaft 113 of the carrier beam 106. This adjustment can be effected by inserting the locking pin 111 into a different hole 110 or into a different hole 112, respectively. The rods 105 can then become located between the tips of the tines 94 which move about the axis of rotation 79. The crop will then be pushed by the tines 94 to some extent between the adjacent rods 105, so that a more intense processing of the crop can be achieved.

The tines 94, which during rotation of the rotor-shaped processing member 61 most closely approach the periphery of the drum-shaped member 38, have pointed end portions 98. During their rotation, the tips of the end portions 98 move closely along the periphery of the relevant drum-shaped member 38. The end portions 98 then move at a short distance 101 from the periphery of the drum-shaped member 38. In a side view, the periphery of the drum-shaped member 38 is formed such that it is curved in the vertical direction and the concave side faces outwardly. The upper end 132 of the drum-shaped member 38, which is higher than the shaft 79 at a vertical position of the plane 104, is approximately cylindrical. Lower downwardly the periphery is curved, the centre of this curve being approximately in the region of the shaft 79. However, the radius of curvature is larger than that of the imaginary cylinder plane 118 through which the tips of the tines 94 pass during rotation of the processing member 61. In a side view as shown in Figure 6, the imaginary cylinder surface 118 is approximately contiguous to the rear sides of the periphery of the drum-shaped members 38 of the adjacently arranged mowing members 35. Those sides of the members 38 that face rearwardly towards the processing member 61 are hollow. Because of the location of the mowing members near the periphery of the processing member 61, the crop moved rearwardly by the mowing members 35 can be picked up appropriately by the processing member 61. A rather large space is present between the drum-shaped carrier member 62 and the rods 105 as a result of the space bounded by adjacent projections 67 and interposed wall portions 64, so that rather large quantities of crop can be passed between the member 61 and the rods 105. In this situation, the projections 67 positively influence the conveyance of the crop. Thus, also large quantities of crop will not be clamped to an excessive extent between the rods 105 and the processing member 61. Thus, the crop will not be damaged when being moved between the member 61 and the rods 105, even when large quantities of crop are mown per unit of time.

The conveyance action and the processing mode of the crop between the member 61 and the grid constituted by the rods 105 can additionally be influenced by controlling the speed of rotation of the rotor-shaped processing member 61. Change wheels 83 and 84 are mounted in the change wheel box 92 for this purpose. By interchanging these gear wheels and by changing them for other gear wheels, the speed of rotation of the shaft 82 can be altered for the same number of revolutions of the power take-off shaft of the tractor.

If no processing of the crop between the rods 105 and the rotor-shaped processing member 61 is required, the direction of rotation of the processing member 61 can be inverted. For that purpose the gear wheels 89 and 90 are provided in the gear box 54, the gear wheel 90 being connected to the coupling shaft 91 which projects from the gear box 54. The intermediate shaft 81 can optionally be connected to the coupling shaft 91 instead of to the coupling shaft 82. Due to the coupling of the intermediate shaft 81 via the coupling shaft 91 and the gear wheels 90 and 89 to the shaft 82, the direction of rotation of the processing member 61 will be opposite to the direction of rotation 131. On rotation of the processing member 61 in the sense indicated by the arrow 133 (Figure 6), the crop moved rearwardly between the drum-shaped members 38 will be conveyed downwardly by the tines 94 and be deposited in a rearward direction on the soil. The crop will then not be pressed by the tines 94 or an other member, so that processing of the crop will be less intense. The turns 95 have been provided such that at the direction of rotation 131 the force the crop exercises on the tines will try to wind up the turns 95. When the member 61 rotates in the direction indicated by the arrow 133, the tines 94 will wind down under the pressure of the crop and will consequently deflect more easily. This will allow the crop to move rearwardly in a less coherent manner, passing below the processing member 61. If, in the direction of rotation 133, a more intense gripping of the crop by the tines 94 is desired, then the rotor-shaped processing member 61 can be removed from between the frame plates 15 and 16. Thereafter, after having been inverted, the processing member can be replaced between the frame plates in such a manner that, relative to the direction of rotation 133, the turns 95 are located behind the tines 94. The tines 94 are thus prevented from moving smoothly to the rear relative to the direction of rotation 133 and they will catch the crop with greater force. Hereby the crop can be slightly broken or crushed. To enable this inversion of the rotor-shaped processing member relative to the frame plates 15 and 16, the intermediate shaft 81 can be removed from the end 77 of the relevant stub axle 73. The ball-bearings 74 are also removed from the plates 15 and 16 to allow the processing member 61 to be detached from the frame plates to be rotated in such a way that the stub axle 73, which was originally coupled to the intermediate shaft 81, is moved to near the frame plate 16 and the other stub axle 73 can be coupled to the intermediate shaft 81. The protective hood 78 is then transferred to the other bearing 74. The radially extending tines 94 have a crop processing function because of the fact that they are under spring load relative to the carrier 62.

In particular when the rotor-shaped processing member 61 is moved about its shaft 79 in the direction indicated by the arrow 131, the crop separating member 120 will deposit the crop moving along the boards 121 and 122 on the soil in such a manner that a strip 134,.which is free from crop, is formed behind the crop separating member 120. In a subsequent operating run, this strip 134 can serve as a track for a tractor wheel. The crop-free strip· 135 formed behind a swath board 124 can serve as a track for the other wheel of the tractor. Thus, strips 134 and 135 constitute tracks for the tractor wheels when a subsequent operating run is performed. When performing such a subsequent operating run, the tractor wheels or the wheels of another vehicle moving the mowing machine will not run over and compress the mown crop which is loosely deposited by the rotor-shaped processing member 61. The spacing 136 between the tracks 134 and 135 can be changed by mounting the crop separator 120 optionally to one of the two strips 119. The two supporting strips are spaced apart by e.g. a distance 139 of 20 cms, so that the track width 136 can optionally be chosen for two positions with a difference of 20 cms. It will be obvious that alternatively more supporting strips 119 can be provided to have a wider choice of distances 136.

According to the invention, the gear box 54, which incorporates transmission members constituted by gear wheels, is located behind the tractor. Then this gear box is mounted, seen in the direction of operative travel 58, midway between the pairs of lugs 7, by means of which the carrier frame 4 can be coupled to the lifting arms of the lifting hitch of the tractor. The gear box 54 is of a considerable weight. By positioning the gear box 54 near that side of the frame 4 that can be coupled to the vehicle, e.g. a tractor, a significant part of the weight of the machine is shifted to the midway point behind the tractor. The direct connection of the several transmission members via the respective intermediate shafts 50 and 81 to the drive shaft 42 for driving the mowing members and the stub axles 73 of the processing member 61, respectively, obviates the necessity of providing heavy machine parts, such as transmission means in a gear box near the mowing section 2. Consequently, the mowing section 2 together with the processing member 3 will be of a lighter weight per running unit of length. Thus, a comparatively light portion of the machine will be located aside the machine, which is advantageous to the distribution of the overall weight of the machine with respect to the tractor. The machine can therefore have a larger working width. In this embodiment, the working width of the six mowing members is therefore approximately 316 cms. Because of the light weight per running unit of length, the working width can be that large without any detrimental effect on the weight distribution of the machine and the tractor, when this unit is used on an uneven field. As a result thereof, the lateral forces on the tractor are low. Additionally, the machine can be easily lifted by the lifting hitch. The construction of the mowing member 35 is also simple, so that the mowing member is of a relatively low weight. The member 38 so reinforces the construction of the mowing member 35 that this member can be of a low weight. The shaft 40 constitutes, together with the member 38, a rigid unit to drive the mowing unit which comprises the carrier 37 and the knives 36. If so desired, the shaft 40 may be omitted and only the drum-shaped member 38 can then be used as a drive means between the gear box and the mowing element. The member 38 then carries the mowing element.

So as to ensure that at the large working width 137 of approximately 316 cms the wheels of the tractor will not run in a subsequent operating run over the processed crop, the crop separating member 120 is applied remote from the ends of the overall working width of the mowing section 2. In this situation, the crop separating member 120 is located at a lesser distance 138 from the end facing the tractor. This distance 138 may differ according as the crop separating member is optionally mounted to one of the two supporting strips 119. In spite of the large working width of the mowing section 2, the ratio of the weight of the mowing section 2 to the overall weight of the machine will be advantageous to such an effect that the centre of gravity of the entire machine will not be located too far outside the tractor. It is then of advantage for the gear box 54 to be located at a large distance from the mowing section 2 or from the end of the carrier arm 6 to which the mowing section 2 is fitted, respectively.

The mowing members 35 are all identical, which also holds for the gear boxes 26. The gear boxes 26 are of such a construction that they can optionally be mounted in the position shown in the left-hand or the right-hand side of Figure 5. For that reason the connecting plates 31 are of a symmetrical structure with respect to the planes 97, so that they can optionally be coupled in one of two positions to the frame beam 17 by means of the bolts 25. The units formed by the gear boxes 26 and the mowing members 35 can be fitted to the frame beam 17 or be detached therefrom independently of each other, after removal of the drive shaft 42. The drive shaft 42 can easily be mounted or removed by inserting them into or remove them from the apertures 29, in the longitudinal direction. When a mowing member 35 or a gear box 26 is damaged, the damaged unit can consequently easily be replaced by another unit consisting of a gear box 26 and a mowing member 35. The gear boxes 26 are sealed boxes, so that no lubricants can escape when the boxes are detached from the beam 17. Consequently, damaged parts can easily be changed in the field. Inversion of the gear boxes 26 renders it also possible to reverse the direction of rotation of the mowing members. If, for example, a small quantity of crop is to be mown, it is possible to mount one half of the number of gear boxes 26 with mowing members 35 located adjacently to each other in such a way that they rotate in the same direction, whilst the other half of the row of adjacent mowing members are given the same rotation, but in the opposite direction. The left-hand half of the row of mowing members can then, for example, be induced to rotate in the direction indicated by the arrow 127, whilst the right-hand half, seen in Figure 1 in the direction of travel 58, can be induced to rotate in the direction indicated by the arrow 128. The mown crop can then be moved rearwardly between the two centremost mowing members and be deposited in a narrow swath. Each half of the row of mowing members consisting of three mowing members then processes approximately 160 cms of the working width. A mowing section may also consist of only three mowing members and then have a total working width of approximately 160 cms. Because of its structure as shown, the mowing section is of a low weight and of a simple construction.

During operation, the mowing section will bear on the soil by means of its supporting members 39 in order to be able to follow the unevennesses of the soil in an advantageous manner. Thus the area to be mown can advantageously be mown evenly. In order to transfer optionally part of the weight of the machine during operation to the tractor, a spring-loaded construction may be disposed between the mowing section 2 and e.g. the upper side of the trestle 9. On locking of the carrier frame 4 in the lifting hitch of the tractor 5, the spring-loaded construction can transfer part of the weight of the mowing section to the tractor. The mowing section will then only bear on the soil with part of its weight via the supporting members 39. This may be of influence in order to have the mowing section 2 follow unevennesses in the desired manner and/or to have the supporting members bear more or less heavily on the soil or more or less heavily on top of the stubbles. The mowing machine can be adjusted to a transport position by moving the mowing section 2 upwardly through 90° relative to the carrier arm 6 by pivoting the lifting hitch 125 about the pivotal shaft 20. In this connection, it is also advantageous for the mowing section 2 to be of a low weight.

Although in this embodiment the gear boxes 26 are mounted under the frame beam 17, it is in principle also possible to construct the gear boxes 26 in such a way that they can be mounted, for example, in front of or behind the frame beam 17. The protective hoods 57 are provided in particular in those regions where crop is moved rearwardly between two adjacently arranged drum-shaped members 38. The protective hood 57 then prevents crop moving rearwardly between two mowing members 35 from being caught by the drive shaft 42 and from being wound thereabout. Since the mowing members 35 disposed at the ends of the row of mowing members rotate in the direction as indicated by the respective arrows 127 and 128, a protective hood 57 will not be required and, therefore, not be mounted between the relevant frame plates 15 and 16 and the gear boxes 26 located nearest to these frame plates. Therefore, in Figure 5 no protective hood 57 is provided between the frame plate 15 and the gear box 26. It will be obvious that it is also possible to provide a protective hood 57 in that region.

The invention is not limited to the features described in the foregoing but also relates to all the details shown in the drawings, whether they have been described or not.

## Claims

1. A mowing machine comprising mowing members (35) which are power-driven about upwardly extending axes of rotation (41), and a rotor-shaped processing member (61) provided near said mowing members, characterized in that at least one mowing member (35) includes an upwardly extending drum-shaped member (38), the outer circumference of which describes during operation an imaginary figure which, seen in a direction transversely to the direction of operative travel of the machine has such a concave rear side that said drum-shaped member (38) can co-operate with the periphery of the rotor-shaped processing member (61).

2. A mowing machine as claimed in claim 1, characterized in that the drum-shaped member (38) is a substantially fully closed wall-shaped member provided at least substantially concentrically about the axis of rotation (104) of the mowing member.

3. A mowing machine as claimed in claim 1 or 2, characterized in that the periphery of the drum-shaped member (38) curves and tapers upwardly, at least near its lower side.

4. A mowing machine as claimed in any one of the preceding claims, characterized in that a mowing member (35) is coupled to a pair of bevel gear wheels (27, 30) in a sealed gear box (26), which is fitted detachably to a frame beam (17) of the mowing machine by means of bolts such that the gear box (26) is connectable to the frame beam (17) in at least two positions using the same bolts and bolt holes.

5. A mowing machine as claimed in claim 4, characterized in that a drive shaft (42) extends through two or more gear boxes (26) for driving the mowing members (35) via the gear wheels (27, 30) in the gear boxes, the drive shaft (42) allowing of easy mounting in or removal from the gear boxes (26).

6. A mowing machine as claimed in claim 4 or 5, characterized in that a gear box (26) with the bevel gear wheel (27, 30) disposed therein is of such a construction that the gear box (26) is mountable to the frame beam (17) in optionally one of two positions which are rotated through 180° about the axis of rotation (41) of the mowing member, such that when the drive shaft is driven, the mowing member (35) is optionally drivable in one of two opposite directions.

7. A mowing machine as claimed in any one of the preceding claims, characterized in that the rotor-shaped processing member (61) is provided with at least one tine (94) whose end portion (98) is thinner than the portion remote from its tip, the tines having thinner end portions (98) moving during operation of the machine near the drum-shaped member (38) of a mowing member (35).

8. A mowing machine as claimed in any one of the preceding claims, characterized in that the processing member (61) has spring-loaded tines.

9. A mowing machine as claimed in any one of the preceding claims, characterized in that the drum-shaped processing member (61) is coupled to drive means (81, 91, 90, 89) which are of such a construction that during operation the drum-shaped processing member (61) is optionally rotatable about its axis of rotation (77) in one of the two opposite directions.

10. A mowing machine as claimed in any one of the preceding claims, characterized in that the processing member (61) comprises a carrier (62) which is assembled from two or a plurality of substantially identical plate-shaped members (69) intercoupled by means of connecting elements, by means of which also tine-shaped projections (63) associated with the processing member (61) are connected to the carrier member (62).

11. A mowing machine as claimed in claim 10, characterized in that the carrier member (62) assembled from the plate-shaped members (69) is of such a construction that the connecting members (71) are located at a shorter distance from the axis of rotation (79) of the processing member than those portions (67) of the drum-shaped carrier member (62) that are located most remote from said axis of rotation (79).

12. A mowing machine as claimed in claim 10 or 11, characterized in that the drum-shaped carrier member (62) is assembled from four substantially identical plate-shaped members (69), each having walls which are arranged relative to each other in the shape of a V (67) and in those parts which are most remote from each other have wall portions (64) which are substantially perpendicularly to each other and are provided with connecting edges (70), by means of which the plate shaped members are intercoupled for forming the drum-shaped carrier member (62).

13. A mowing machine as claimed in any one of the preceding claims, when appendant on claim 4, characterized in that the frame beam (17) has its ends coupled to two at least substantially parallel arranged frame plates (15, 16) which extend in the direction of operative travel of the mowing machine and on which the drum-shaped processing member (61) is mounted, which processing member is disposed behind a plane (104) comprising the axes of rotation (41) of the adjacently arranged mowing members (35), seen in the direction of operative travel of the mowing machine.

14. A mowing machine as claimed in claim 13, characterized in that the drum-shaped processing member (61) is applied together with two bearings (74) which are detachable from the frame plates (15, 16) and are provided reversely to the frame plates, such that optionally one or the other end of the processing member (61) is connectable to one and the same frame plate, so that, seen in the direction of operative travel of the mowing machine, optionally one or the other end of the processing member can be located at the left-hand side of the processing member, whereby each end of the processing members (61) is provided with a stub axle (77), to which a drive member (81) for driving the processing member is connectable to obtain one and the same direction of rotation of the tine-shaped projections (63) independent of the direction of rotation opted for during operation of the processing member.

15. A mowing machine as claimed in any one of the preceding claims, characterized in that a grid assembled from rods (105) is provided near the upper side of the processing member (61), to cooperate with the processing member (61), said rods (105) extending at least substantially parallel to the direction of operative travel (58) of the mowing machine, during operation, and being interspaced by distances (116) which are at least substantially equal to the distance between the tines (63) which are arranged in a row and are fitted to the processing member.

16. A mowing machine as claimed in claim 15, characterized in that those ends of the rods (105) which are in the forward position relative to the direction of operative travel (58) of the mowing machine are coupled to a carrier beam (106) provided in the mowing machine frame, said carrier beam being rotatably bearing-supported in the frame plates (15, 16) of the mowing machine frame and being optionally lockable in one of at least two different positions relative to the frame plates for readjusting the rods (105).

17. A mowing machine as claimed in any one of the preceding claims, characterized in that a crop separator member (120) is provided remote from the facing ends of the drum-shaped processing member (61).

18. A mowing machine as claimed in any one of the preceding claims, chatacterized in that the mowing section (2) of the mowing machine comprising the mowing members (35) is coupled to a carrier frame (6), by means of which the mowing machine can be coupled to the lifting hitch of a tractor (5) or a suchlike vehicle, said mowing section (2) being pivotal relative to the carrier frame about the axis of a pivotal shaft (19) which, during operation, extends at least substantially in the direction of operative travel (58) of the mowing machine.

19. A mowing machine as claimed in any one of the preceding claims, characterized in that the mowing machine includes transmission members for driving the mowing members (35) and/or the drum-shaped processing member (61) and are provided with a connecting means , by means of which the transmission members can be coupled to the power take-off shaft of a tractor or a suchlike vehicle, which transmission members comprise a gear box (54), in which gear wheels are located which by means of intermediate shafts (50, 81) can be coupled to the drive shaft (42) extending along the row of mowing members (35) and/or to the processing member (61), which gear box is located at least approximately midway between the connecting members applied to the mowing machine, by means of which the mowing machine can be coupled to the lifting hitch of the tractor or a suchlike vehicle.

0 262 742

FIG. 1

FIG. 2

FIG. 3

FIG. 4

Fig. 5

Fig. 6

FIG. 7